**Europäisches Patentamt**

**European Patent Office**

**Office européen des brevets**

(19)

(11) Veröffentlichungsnummer: **0 009 581**
**B1**

(12) **EUROPÄISCHE PATENTSCHRIFT**

(45) Veröffentlichungstag der Patentschrift:
**15.02.84**

(51) Int. Cl.³: **G 01 B 11/06**

(21) Anmeldenummer: **79102994.5**

(22) Anmeldetag: **16.08.79**

(54) **Verfahren zum Ermitteln der Dicke von Bändern, welche über Walzen bewegt werden.**

(30) Priorität: **29.09.78 DE 2842670**

(43) Veröffentlichungstag der Anmeldung:
**16.04.80 Patentblatt 80/8**

(45) Bekanntmachung des Hinweises auf die Patenterteilung:
**15.02.84 Patentblatt 84/7**

(84) Benannte Vertragsstaaten:
**BE CH FR GB NL**

(56) Entgegenhaltungen:
**DE - A - 1 623 188**
**FR - A - 1 605 232**
**FR - A - 2 078 325**
**US - A - 3 187 185**
**US - A - 3 518 441**
**US - A - 3 858 983**

(73) Patentinhaber: **SIEMENS AKTIENGESELLSCHAFT,**
**Berlin und München Wittelsbacherplatz 2,**
**D-8000 München 2 (DE)**

(72) Erfinder: **Bodlaj, Viktor, Dr., Werinherstrasse 69,**
**D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Verfahren zur Ermittlung der Dicke von Bändern, welche über Walzen bewegt werden

Die vorliegende Erfindung betrifft ein Verfahren zum berührungslosen Ermitteln der Dicke eines über eine Walze laufenden Bandes nach dem Oberbegriff des Patentanspruchs 1.

Aus der DE-A 22 29 887 ist bereits ein Verfahren zum berührungslosen Ermitteln der Dicke eines Bandes mittels einer Vorrichtung der genannten Art bekannt. Dabei wird die dort mit Bezugslinie bezeichnete Bezugsebene in eine von der Vorrichtung abgewandte Oberfläche des zu messenden ebenen Bandes gelegt und durch Messen des Abstandes der der Vorrichtung zugekehrten ebenen Oberfläche des Bandes dessen Dicke bestimmt.

Aus der US-A 3 858 983 ist ein Verfahren zum berührungslosen Ermitteln der Dicke eines über eine Walze laufenden Bandes bekannt, bei dem ein walzenaxial bewegter Lichtstrahl sowohl die Mantelfläche der Walze als auch die von der Walze abgewandte Oberfläche des Bandes abtastet und bei dem das von diesen Flächen gestreute Licht von einem einzigen Messempfänger empfangen wird. Der Abstand der Mantelfläche der Walze und der Abstand der von der Walze abgekehrten Oberfläche des Bandes wird von der Vorrichtung gemessen und durch Differenzbildung die Dicke des Bandes ermittelt.

Aus der FR-A 20 78 325 ist ein Verfahren zum berührungslosen Ermitteln der Dicke eines über eine Walze laufenden Bandes bekannt, bei welchem die Mantelfläche der Walze und die von der Walze abgekehrte Oberfläche des Bandes durch je einen Lichtstrahl aus einer gemeinsamen Lichtquelle abgetastet werden. Das von diesen Flächen zurückgesandte Licht wird wie bei dem Verfahren gemäss der US-A 3 858 983 dem gleichen Detektor zugeführt, im Gegensatz zu dort aber nicht zeitlich nacheinander, sondern überlagert und gleichzeitig. Das Messprinzip beruht auf dem Vergleich der Phasen der überlagerten Strahlen.

Aufgabe der Erfindung ist es, ein Verfahren der eingangs genannten Art dahingehend zu verbessern, dass die Dicke des über eine Walze laufenden Bandes auch dann noch genau gemessen werden kann, wenn die Walze unrund läuft.

Diese Aufgabe wird durch die im kennzeichnenden Teil des Patentanspruchs 1 angegebenen Merkmale gelöst.

Vorzugsweise wird mit Detektoren gemäss Anspruch 2 gemessen. Vorzugsweise werden die hin- und herbewegten Lichtstrahlen gemäss Anspruch 3 erzeugt.

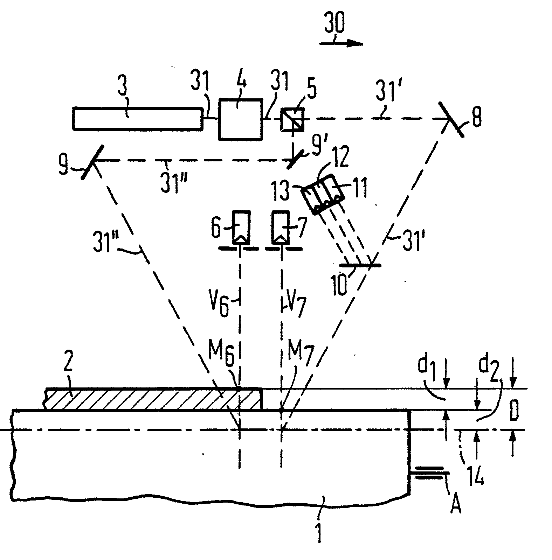

Die Erfindung wird anhand einer beispielhaften Vorrichtung zur Durchführung des Verfahrens, welches in der Figur schematisch dargestellt ist, näher erläutert.

In der Figur ist mit 1 eine um eine Walzenachse A drehbar gelagerte Walze bezeichnet, bei welcher ein linker und ein unterer Teil weggebrochen sind. Die Walze 1 ist in einer Ansicht senkrecht zur Walzenachse A dargestellt, so dass auf ihren Mantel geblickt wird. Auf der Walze liegt ein Band 2, welches im Schnitt dargestellt ist und von dem ebenfalls ein linker Teil weggebrochen ist. Oberhalb der Walze mit dem Band befindet sich eine Vorrichtung zum berührungsfreien Messen des Abstands einer Stelle auf der Oberfläche eines Objekts von einer Bezugsebene. Diese Vorrichtung umfasst einen Laser 3, welcher ein Laserstrahlbündel 31 in der waagrechten Richtung 30 aussendet. Dieses Laserstrahlbündel 31 wird von einem Strahlablenker 4 periodisch abgelenkt, so dass er sich in einer vertikalen Richtung laufend hin- und herbewegt, wobei er seine Richtung 30 beibehalten oder seine Richtung laufend ändern kann. Die Auslenkamplitude braucht nicht allzu gross sein. Die Figur ist in einer Art Momentaufnahme dargestellt, bei welcher das aus dem Strahlablenker austretende Lichtstrahlbündel gerade mit der Achse des Lichtstrahlbündels 31 zusammenfällt, also gerade nicht ausgelenkt ist und dieses Lichtstrahlbündel ist daher ebenfalls mit 31 bezeichnet.

Das aus dem Strahlablenker hin- und herbewegte Lichtstrahlbündel trifft auf einen im Strahlengang angeordneten Strahlteiler 5, welcher das hin- und herbewegte Lichtstrahlbündel in zwei getrennte hin- und herbewegte Lichtstrahlbündel aufteilt, wovon das durch den Strahlteiler 5 durchgegangene Lichtstrahlbündel mit 31' und das reflektierte Lichtstrahlbündel mit 31" bezeichnet ist. Der Strahlteiler 5 kann beispielsweise ein Strahlteilerwürfel sein.

Zwei Messfotodetektoren 6 und 7 sind über der Walze und dem Band so angeordnet, dass der Messfotodetektor 6 über dem Band 2 und der Messfotodetektor 7 über einem freien Teil des Walzenmantels angeordnet ist. Die Visierlinien $V_6$ und $V_7$ beider Messempfänger 6 und 7 verlaufen vertikal und schneiden die Walzenachse A.

Durch einen Spiegel 8 wird das hin- und herbewegte Lichtstrahlbündel 31' zur Visierlinie $V_7$ hingelenkt und das hin- und herbewegte Lichtstrahlbündel 31" durch Spiegel 9' und 9 zur Visierlinie $V_6$. Beide hin- und herbewegten Lichtstrahlbündel 31' und 31" schneiden die Visierlinie $V_7$ bzw. $V_6$ stets und überstreichen auch jeweils den Durchstosspunkt $M_7$ bzw. $M_6$, wo die Visierlinie $V_7$ bzw. $V_6$ die Oberfläche der Walze 1 bzw. des Bandes 2 durchstösst. Im Bereich des Lichtstrahlbündels 31' ist noch ein Strahlteilerspiegel 10 angeordnet, welcher einen Teil des Lichtstrahlbündels 31' auf Messempfänger mit Visierlinien 11, 12 und 13 lenkt, und welche zur Steuerung der Abtastgeschwindigkeit und zum Festlegen der Auslenkamplitude dienen, und durch welche dann die Bezugsebene festgelegt ist, deren Spur in der Zeichenebene waagrecht verläuft und mit 14 bezeichnet ist. Wie schon erwähnt, wird auf die genaue Wirkungsweise der dargestellten Vorrichtung nicht näher eingegangen, weil dies bekannt ist, jedoch sei so viel gesagt, dass aus der Ablenkperiode und aus der Lage des Zeitpunkts relativ zu dieser Periode, bei welchem ein Messempfänger 6 oder 7 registriert, der Abstand $d_2$ bzw. D errechnet

werden kann, was in einer elektronischen Auswerteeinrichtung geschehen kann.

Nach dem hier vorgeschlagenen Verfahren wird also mit Hilfe des hin- und herbewegten Lichtstrahlbündels 31' und dem Messempfänger 7 der Abstand $d_2$ von der Bezugsebene und mit Hilfe des hin- und herbewegten Lichtstrahlbündels 31" und des Messempfängers 6 der Abstand D von der Bezugsebene 14 gemessen. $d_2$ ist der Abstand des Walzenmantels von der Bezugsebene und D der Abstand der Aussenfläche des Bandes von der Bezugsebene.

Die tatsächliche Dicke $d_1$ des Bandes 2 ergibt sich aus der Differenz $D-d_2$. Dies kann mit Hilfe einer elektronischen Subtrahierschaltung durchgeführt werden, weil eine Vorrichtung zum berührungsfreien Messen des Abstands in der Regel eine elektronische Auswerteeinrichtung besitzt, aus welcher D und $d_2$ mit elektrischen Signalen vercodet entnehmbar sind.

Dadurch, dass die Visierlinien $V_6$ und $V_7$ die Walzenachse senkrecht schneiden, durchstossen sie auch den Walzenmantel bzw. die Aussenfläche des Bandes senkrecht. Dies ist besonders zweckmässig, weil in diesem Fall kein Versatz der Messpunkte $M_6$ und $M_7$ auf den Oberflächen der verschiedenen Abständen D und $d_2$ auftritt.

Der optische Weg des Strahlenbündels 31' kann kürzer als der des Strahlenbündels 31" gewählt werden, da das Teilstrahlbündel 31' nur den unrunden Lauf der Walze zu messen hat.

Die Abtastung und Messung kann mit einer solchen Vorrichtung so schnell erfolgen, dass das bewegte Band und die sich drehende Walze als ruhend betrachtet werden können. Dadurch wird auch der Effekt einer gleichzeitigen Messung bei beiden Punkten $M_6$ und $M_7$ erzielt. Man erhält auf diese Weise besonders genaue Messungen.

**Patentansprüche**

1. Verfahren zum berührungslosen Ermitteln der Dicke (d 1) eines über eine Walze (1) laufenden Bandes (2), bei dem zur Messung dieser Dicke mittels einer Vorrichtung zum berührungsfreien Messen des Abstandes einer Oberfläche eines Objekts von einer bezüglich der Vorrichtung festen Bezugsebene durch Abtasten der Oberfläche mittels eines hin- und herbewegten scharfgebündelten Lichtstrahls (31") und durch Empfang des von der Oberfläche des gestreuten Lichts durch Empfang des von der Oberfläche des gestreuten Lichts durch einen eine scharfgebündelte Empfangscharakteristik längs einer Visierlinie (V6) aufweisenden Messempfänger (6) der Abstand einer Oberfläche des Bandes (2) von der Bezugsebene (14) gemessen wird, dadurch gekennzeichnet, dass mit einer ersten Vorrichtung (3, 4, 5, 9', 9, 6) im Bereich der Walze (1) der Abstand (D) der von der Walze (1) abgekehrten Oberfläche des Bandes (2) von der festen Bezugsebene (14) durch bezüglich der Walze axiales Hin- und Herbewegen des Lichtstrahles (31") gemessen wird, dass zusätzlich die über das Band (2) seitlich hinausstehende Mantelfläche der Walze (1) mittels einer zweiten gleichartig arbeitenden Vorrichtung (3, 4, 5, 8, 7) abgetastet und so der Abstand $(d_2)$ der Mantelfläche der Walze (1) von der Bezugsebene (14) der zweiten Vorrichtung, die mit der Bezugsebene der ersten Vorrichtung zusammenfällt, gemessen wird, und dass eine Differenz $(D - d_2)$ zwischen den beiden gemessenen Abständen $(D, d_2)$ gebildet wird, die betragsmässig der Dicke $(_1)$ des Bandes entspricht.

2. Verfahren nach Anspruch 1, dadurch gekennzeichnet, dass mit Detektoren (6, 7) gemessen wird, deren Visierlinien parallel verlaufen und die die Walzenachse (A) senkrecht schneiden.

3. Verfahren nach Anspruch 1 oder 2, dadurch gekennzeichnet, dass die beiden hin- und herbewegten Lichtstrahlen (31", 31') aus einem hin- und herbewegten Lichtstrahl (31) durch Strahlteilung erzeugt werden.

**Claims**

1. A process for the non-contact determination of the thickness ($d_1$) of a strip (r) running across a roller (1), by means of a device for the non-contact measurement of the spacing of a surface of an object from a reference plane that is fixed relative to the device, the spacing of a surface of the strip (2) from the reference plane (14) being measured by scanning the surface using a sharply focused light beam (31") moved back and forth, and by receiving the light scattered from the surface in a measuring receiver (6) which possesses a sharply focused receiving characteristic along a line of sight (V6), characterised in that by means of a first device (3, 4, 5, 9', 9, 6) in the region of the roller (1) the spacing (D) between the surface of the strip (2) remote from the roller (1) and the fixed reference plane (14) is measured by axially moving the light beam (31") back and forth relative to the roller, that the surface area of the roller (1), which laterally projects beyond the strip (2), is additionally scanned by a second similarly operating device (3, 4, 5, 8, 7) and thus the spacing ($d_2$) between the surface area of the roller (1) and the reference plane (14) of the second device, which coincides with the reference plane of the first device, is measured, and that a difference ($D-d_2$) between the two measured spacings ($D, d_2$) is formed which in terms of value corresponds to the thickness ($d_1$) of the strip.

2. A process as claimed in Claim 1, characterised in that the measurement is carried out by means of detectors (6, 7) whose lines of sight extend mutually parallel and vertically intersect the roller axis (A).

3. A process as claimed in Claim 1 or 2, characterised in that the two light beams (31", 31') which are moved back and forth, are produced by beam division from one light beam (31) which is moved back and forth.

**Revendications**

1. Procédé pour déterminer sans contact l'épaisseur ($d_1$) d'une bande (2) qui passe sur un rouleau (1), dans lequel, pour mesurer cette épaisseur au moyen d'un dispositif pour la mesure sans contact de la distance entre une surface d'un objet et un plan de référence fixe par rapport au dispositif, on mesure la distance d'une surface de la bande (2) par rapport au plan de référence (14) par exploration de la surface au moyen d'un faisceau lumineux (31″) finement focalisé et effectuant un mouvement de va-et-vient et par réception de la lumière diffusée par la surface par un récepteur de mesure (6) possédant une caractéristique de réception finement focalisée suivant une ligne de visée (V6), caractérisée par le fait qu'on mesure la distance (D) de la surface de la bande (2) opposée au rouleau (1) par rapport au plan de référence fixe (14) par un mouvement de va-et-vient axial du faisceau lumineux (31″) par rapport au rouleau, à l'aide d'un premier dispositif (3, 4, 5, 9′, 9, 6) dans la région du rouleau (1), qu'en outre on explore la surface périphérique du rouleau (1) qui s'étend latéralement au delà de la bande (2) au moyen d'un second dispositif (3, 4, 5, 8, 7) travaillant de façon similaire et de ce fait on mesure la distance ($D_2$) entre la surface périphérique du rouleau (1) et le plan de référence (14) du second dispositif, qui coincide avec le plan de référence du premier dispositif, et on forme une différence ($D-d_2$) entre les deux distances mesurées ($D, d_2$), qui correspond en valeur à l'épaisseur ($d_1$) de la bande.

2. Procédé suivant la revendication 1, caractérisé par le fait que la mesure est effectuée à l'aide de détecteurs (6, 7) dont les lignes de visée sont parallèles et coupent perpendiculairement l'axe (A) du rouleau.

3. Procédé suivant la revendication 1 ou 2, caractérisé par le fait que les deux faisceaux lumineux (31″, 31′) effectuant un mouvement de va-et-vient sont produits par séparation d'un faisceau lumineux (31) effectuant un mouvement de va-et-vient.